(19) Europäisches Patentamt
European Patent Office
Office européen des brevets

(11) **EP 2 574 811 A2**

(12) **EUROPEAN PATENT APPLICATION**

(43) Date of publication:
**03.04.2013 Bulletin 2013/14**

(51) Int Cl.:
***F16D 25/0638*** (2006.01)

(21) Application number: **12186310.4**

(22) Date of filing: **27.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2011 US 201113249347**

(71) Applicant: **Hamilton Sundstrand Corporation Windsor Locks, CT 06096-1010 (US)**

(72) Inventors:
• **Long, Charles E.**
  **Rockford, IL Illinois 61108 (US)**
• **Weyl, Raymond N.**
  **Rockford, IL Illinois 61108 (US)**

(74) Representative: **Tomlinson, Kerry John**
**Dehns**
**St Bride's House**
**10 Salisbury Square**
**London**
**EC4Y 8JD (GB)**

(54) **Hydraulic clutch**

(57)     A hydraulic clutch apparatus (100) includes a first hub (101), wherein the first hub includes a plurality of frictional clutch discs (110) arranged therein, and a second hub (102) arranged within the first hub and proximate the plurality of frictional clutch discs, wherein the second hub includes a first toroidal hydraulic chamber (106) configured to depress the plurality of frictional clutch discs and a second toroidal hydraulic chamber (109) opposing the first toroidal hydraulic chamber.

FIG. 1

**Description**

BACKGROUND OF THE INVENTION

The present invention is related to hydraulic clutches, and more particularly, exemplary embodiments of the present invention are related to hydraulic clutches comprising hydraulic balance chambers.

High-speed, hydraulically actuated clutches generate large centrifugal pressures. The centrifugal pressure, operating on a clamping piston, generates clamp loads in excess of forces provided by most mechanical springs designed to release a clutch. Therefore, these clamp loads must be overcome to effectively release an applied clutch. Conventionally, a costly mechanical dump valve is implemented to circumvent the clamp loads and allow springs to retract an applied clutch. This results in additional time and fluid necessary to refill a hydraulic clutch application chamber and an associated hydraulic circuit for subsequent clutch application.

BRIEF DESCRIPTION OF THE INVENTION

According to an exemplary embodiment of the present invention, a hydraulic clutch apparatus includes a first hub, wherein the first hub includes a plurality of frictional clutch discs arranged therein, and a second hub arranged within the first hub and proximate the plurality of frictional clutch discs, wherein the second hub includes a first toroidal hydraulic chamber configured to depress the plurality of frictional clutch discs and a second toroidal hydraulic chamber opposing the first toroidal hydraulic chamber.

According to another exemplary embodiment of the present invention, a hydraulic clutch apparatus includes an output portion, a first hub in mechanical communication with the output portion, a second hub in mechanical communication with the first hub through a plurality of frictional clutch discs, and an input portion in mechanical communication with the second hub. According to the embodiment, the second hub includes a first hydraulic cavity configured to expand and depress the plurality of frictional clutch discs and the second hub further includes a second hydraulic cavity in mechanical communication with the first hydraulic cavity which is configured to restrict expansion of the first hydraulic cavity in response to rotation of the second hub.

BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 is a cross sectional view of a hydraulic clutch, according to an exemplary embodiment; and

FIG. 2 is an expanded cross sectional view of the hydraulic clutch of FIG. 1.

DETAILED DESCRIPTION

According to an embodiment of the present invention, a hydraulic clutch is provided which simplifies clutch application in high-speed rotating devices. The clutch includes a hydraulic balancing chamber opposing a conventional clutch application chamber. The hydraulic balancing chamber is in mechanical and fluid communication with the application chamber. The inner radius of the hydraulic balancing chamber is sized to produce an axial force sufficient to retract a clutch application piston, thereby forcing the application chamber fluid to sump through an associated hydraulic circuit. Thus, the hydraulic balancing chamber allows hydraulic release of an applied clutch without costly dumping of fluid to circumvent centrifugal pressure. The technical effects and benefits of the invention include increased reliability, lower cost, and enhanced controllability of engagement events for the clutch due to reduction in the effects of centrifugal forces within the clutch.

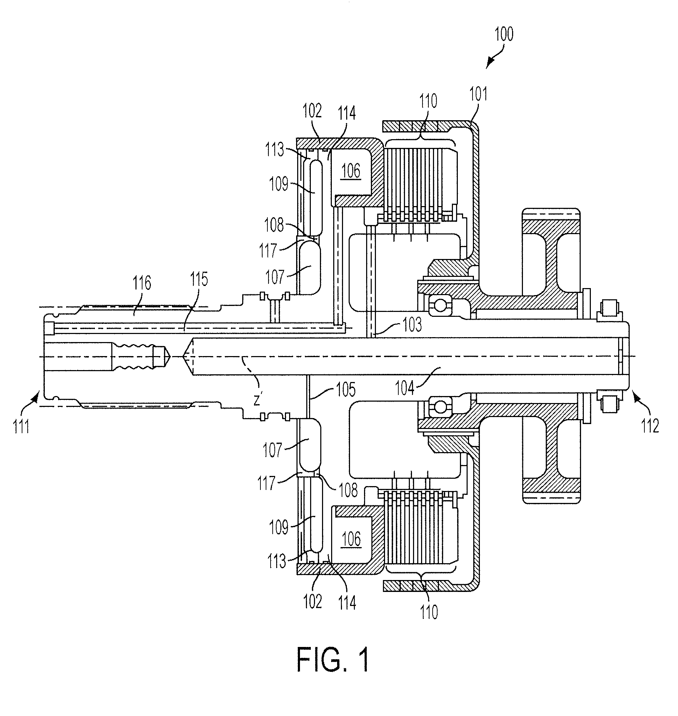

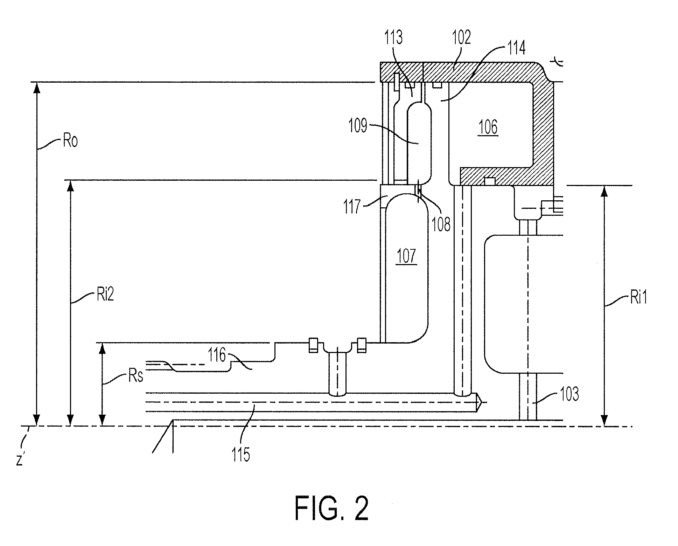

Turning to FIGS. 1 and 2, cross sectional views of a hydraulic clutch are provided. The clutch 100 is configured to engage or disengage rotational torque provided from an input portion 111 to an output portion 112 and transfer rotational energy from the input portion 111 to the output portion 112 through a plurality of clutch discs 110. The axis of rotation of the clutch 100 is herein referred to and labeled as Z'. As illustrated, the clutch 100 includes a first hub 101 arranged about a second hub 102. Each of the first hub 101 and second hub 102 may be rotationally symmetric about the Z' axis (i.e., central axis).

The second hub 102 may be configured to depress the plurality of clutch discs 110 arranged within the first hub 101 so as to engage the clutch 100. The clutch 100 may include a plurality of hydraulic circuits arranged therein to enable depressing the plurality of clutch discs 110. The plurality of clutch discs 110 may be annular, frictional clutch discs of any suitable material and form. The plurality of clutch discs 110 may be wet clutch discs configured to receive oil or fluid for cooling through hydraulic circuit 103 supplied through fluid reservoir 104.

The clutch 100 includes a primary or application chamber 106. The application chamber 106 is a first toroidal hydraulic chamber within the second hub 102 defined by interior space of the hub 102 and annular wall 114. Annular wall 114 is a protrusion from a main body 116 of the clutch 100, and provides support for the second hub 102. The clutch 100 further includes hydraulic application circuit 115 in fluid communication with the application chamber 106. As illustrated, hydraulic application circuit 115 may transfer hydraulic fluid through main body 116 to fill the application chamber 106. Upon receiving hydraulic fluid, increase in pressure within the application chamber 106 causes the second hub 102 to slide upon annular wall 114 thereby depressing the plurality of clutch discs 110 against the interior of hub 101. Thus, the combination of hydraulic circuit 115 and application chamber 106 allows application of the clutch 100.

It should be appreciated that as the clutch 100 rotates, hydrostatic pressure builds within application chamber 106 thereby increasing expansive forces within the chamber 106, which would otherwise increase the force applied on the plurality of clutch discs 110 and increase a required force to disengage the clutch. However, in order to balance and mitigate negative effects from rotation, an opposing balance chamber 109 is provided.

The balance chamber 109 is a second toroidal hydraulic chamber within the second hub 102 defined by interior space of the hub 102, annular wall 114, annular wall 113, and annular wall 117. Annular wall 117 is a protrusion from main body 116. Annular wall 113 is fixedly attached to second hub 102 and is configured to slide upon annular support wall 117. The balance chamber 109 is configured to receive hydraulic fluid through passage 108. Hydraulic fluid is provided to the balance chamber 109 from supply chamber 107. Finally, hydraulic fluid is provided to supply chamber 107 from hydraulic circuit 105. Upon receiving hydraulic fluid, increase in pressure within the balance chamber 109 restricts the expansive forces of chamber 106, thereby serving to mechanically "balance" the hydraulic system.

For example, as the clutch 100 rotates, hydrostatic pressure building within the application chamber 106 is mitigated through hydrostatic pressure building within balance chamber 109, which produces expansive forces against annular wall 113. Therefore, overall forces between wall 113 and hub 102 are balanced. It should be appreciated that a relative size and radial position of each of the application chamber 106 and balance chamber 109 determine an overall balance to centrifugal forces within the clutch 100. Further, a central axis of the main body is collinear with a central axis of the first hub and a central axis of the second hub as shown in FIG. 2 denoted as Z'.

Turning to FIG. 2, the relative size and position the application chamber 106 and balance chamber 109 are illustrated in detail. As illustrated, all values are determined through the radial distance from the axis Z'. Ro is the radial distance to an outer wall of the hub 102. Ri1 is the radial distance to an inner wall of the hub 102. Ri2 is the radial spill distance to the fluid passage 108. Finally, Rs is the radial distance to the supply chamber 107. Accordingly, the average centrifugal pressure apparent for any speed of revolution of the clutch 100 may be easily calculated through these radial distances.

For example, the average centrifugal pressure of the application chamber 106 may be calculated with Equation 1, provided below:

$$\text{Equation 1: } C*(RPM/100)^2*((Ro^4/2)-(Ri1^4/2)-(Rs^2*Ro^2)+(Rs^2*Ri1^2))/(pi*Ro^2-Ri1^2)$$

In Equation 1, RPM denotes the revolutions per minute of the entire clutch assembly 100, pi denotes the constant denoting the ratio of a circular circumference versus diameter, and C denotes a constant value or corrective value.

Similarly, the average centrifugal pressure of the balance chamber 109 may be calculated with Equation 2, provided below:

$$\text{Equation 2: } C*(RPM/100)^2*((Ro^4/2)-(Ri2^4)/2)-(Rs^2*Ro^2)+(Rs^2*Ri2^2))/(pi*Ro^2-Ri2^2)$$

Using equations 1 and 2, suitable design values for the radial distances illustrated in FIG. 2 may be found to correctly balance the centrifugal forces apparent within hydraulic circuits of the clutch 100.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention, which is defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A hydraulic clutch apparatus, comprising:

   a first hub, wherein the first hub includes a plurality of frictional clutch discs arranged therein; and
   a second hub having a portion proximate the plurality of frictional clutch discs, wherein the second hub includes a first toroidal hydraulic chamber configured to depress the plurality of frictional clutch discs, wherein the second hub further includes a second toroidal hydraulic chamber, arranged to oppose the first toroidal hydraulic chamber, and wherein the second toroidal hydraulic chamber is configured to balance centrifugal expansion forces of the first toroidal hydraulic chamber.

2. The apparatus of claim 1, further comprising:

   an input portion in mechanical communication with the second hub; and
   an output portion in mechanical communication with the first hub, wherein the plurality of frictional clutch discs are disposed to transfer rotational energy from the input portion to the output portion in response to hydraulic fluid filling the first toroidal hydraulic chamber.

3. The apparatus of claim 1 or 2, further comprising a first hydraulic circuit in fluid communication with the first toroidal hydraulic chamber configured to provide hydraulic fluid to the first toroidal hydraulic chamber.

4. The apparatus of claim 3, further comprising a second hydraulic circuit in fluid communication with the second toroidal hydraulic chamber configured to provide hydraulic fluid to the second toroidal hydraulic chamber in response to rotation of the second hub.

5. The apparatus of claim 1, 2, 3 or 4, further comprising a main body arranged within the second hub and configured to rotate the second hub, wherein a central axis of the main body is collinear with a central axis of the first hub and a central axis of the second hub.

6. The apparatus of any preceding claim wherein the second hub is arranged at least partially within the first hub.

FIG. 1

FIG. 2